# EUROPEAN PATENT SPECIFICATION

(11) **EP 1 433 235 B1**
(45) Date of publication and mention of the grant of the patent: **27.07.2005**
(21) Application number: 02765073.8
(22) Date of filing: 03.10.2002
(51) Int. Cl.: H02H 7/08

(54) **MOTOR CONTROL CIRCUIT OVERCURRENT PROTECTION**
ÜBERSTROMSCHUTZ FÜR MOTORSTEUERUNGSSCHALTUNG
PROTECTION DE SURINTENSITE POUR CIRCUIT DE COMMANDE MOTEUR

(30) Priority: 05.10.2001 GB 0123988
(43) Date of publication of application: 30.06.2004
(73) Proprietor: Minebea Co. Ltd., Kitasaku-gun, Nagano 389-0293 (JP)
(72) Inventor: STRIKE, Nigel David, Phoenix, AZ 85046 (US); RIDDOCH, Henry, Renfewshire PA18 6AF (GB)
(74) Representative: Hoarton, Lloyd Douglas Charles
(86) International application number: PCT/GB2002/004466
(87) International publication number: WO 2003/032460

(56) References cited:
- US-A- 4 317 176
- US-A- 4 694 374

## Description

This invention relates to a motor control circuit and more particularly to overcurrent protection in a motor control circuit for a brushless DC motor.

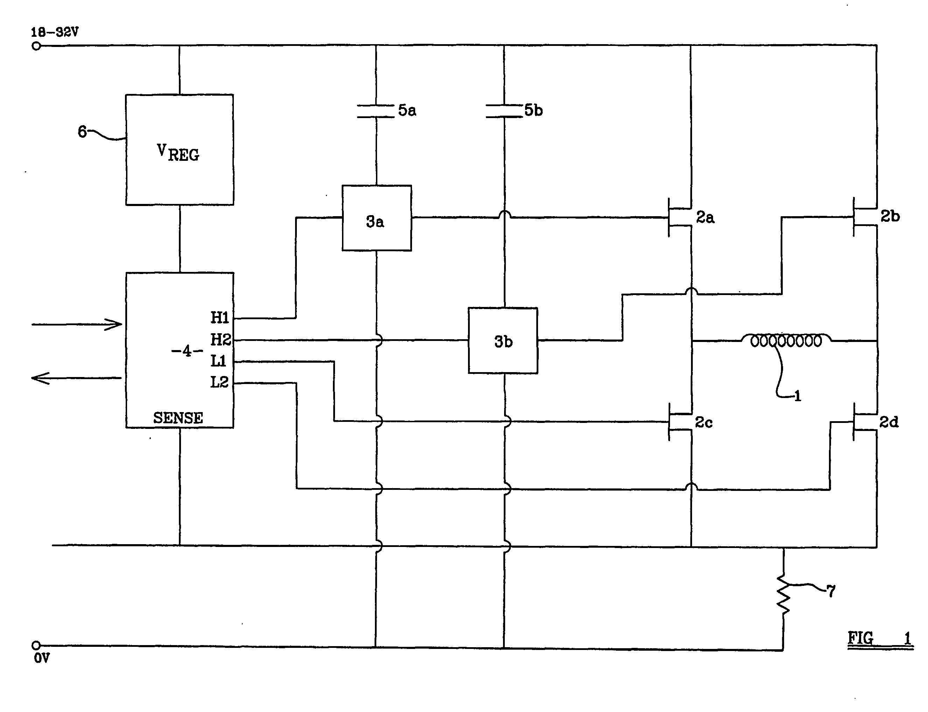

Figure 1 of the accompanying drawings is a schematic circuit diagram of a conventional DC brushless motor control circuit for use in applications such as air moving fans. This circuit uses a microcontroller to control the motor.

In the motor control circuit of Figure 1, a supply voltage is fed to a top rail, for example between 18 to 32 volts DC or 36 to 60 volts DC depending on the motor requirements. The motor windings 1 are connected to a full bridge circuit consisting of four n-type FETs 2a,2b,2c,2d the upper two FET devices 2a,2b being driven by a pair of charge pump circuits (IR2104) 3a,3b. The charge pump circuits each receive a direct feed from the microcontroller IC 4 such as a PIC16C712 and are each connected to the top rail voltage supply by a respective capacitor 5a,5b.

A voltage regulator 6 comprising a linear DC-DC converter supplies the microcontroller IC 4 with 5 volts DC. However, a voltage higher than that provided by the voltage regulator is needed to turn on two of the four FETs, hence the need for the charge pump circuits for the FETs in the top half of the full bridge. The drains of the FETs in the bottom half of the bridge are connected to a resistor 7 to provide an output for sensing the current being drawn by the motor windings 1.

The two n-type FETs 2a and 2b can be replaced with p-type FETs but these are expensive, not readily available and less efficient than n-type FETs.

There is a danger of the motor windings being damaged as a result of an overload or overcurrent and so the current being drawn (from resistor 7) is regularly polled by the microcontroller IC 4 to ensure that it stays below a predetermined threshold and, if the threshold is exceeded, then the microcontroller IC 4 turns off the power supply to the windings 1 by switching off the lower two FET's 2c,2d.

The current threshold is set within the microcontroller IC 4 and can typically be controlled by software. However, there are problems associated with the circuit of Figure 1 and other similar forms of current sensing and overcurrent protection. Whilst such electrically protected motors simply turn off when an overcurrent is sensed, the microcontroller may not be polling the sensed current often enough or quickly enough to detect a potential overcurrent and can therefore fail to switch off the supply to the motor before the windings or FET's are damaged. Ideally, a possible overcurrent situation should be detected and action taken in under 10 milliseconds. The reaction time of the microcontroller IC 4 to sense an overcurrent and prevent damage is therefore curtailed by its processing speed - an undesirable situation.

It is an object of the present invention to seek to overcome the above-mentioned difficulties and provide a motor control circuit which is not dependent on the processing speed or polling frequency of the microcontroller IC 4.

Accordingly, one aspect of the present invention provides motor control circuit for controlling a motor, the circuit comprising a microcontroller operable to provide a driving current to the windings of the motor to be controlled and having an interrupt input which, once triggered, stops the driving current to the windings and thresholding circuitry operable to determine if a signal indicative of a winding current exceeds a reference level and, if so, to trigger the interrupt input, wherein, the thresholding circuitry comprises a reference level setting circuit to set a variable reference level and a comparator circuit to compare the signal indicative of the winding current with the variable reference level.

Conveniently, the variable reference level is software controlled.

Preferably, the reference level setting circuit comprises a low pass filter fed by a variable frequency and/or mark space ratio pulse waveform, the out put of the low pass filter comprising a variable reference voltage.

Advantageously, the variable frequency and/or mark space ratio pulse waveform is an output of the microcontroller.

Conveniently, the frequency of the waveform is software controlled.

In order that the present invention can be more readily understood, embodiments thereof will now be described, by way of example, with reference to the accompanying drawings, in which:
FIGURE 1 is a schematic circuit diagram of a conventional motor control circuit;
FIGURE 2 is a schematic circuit diagram of a motor control circuit setting a fixed reference level, and
FIGURE 3 is a schematic circuit diagram of a motor control circuit embodying the present invention.

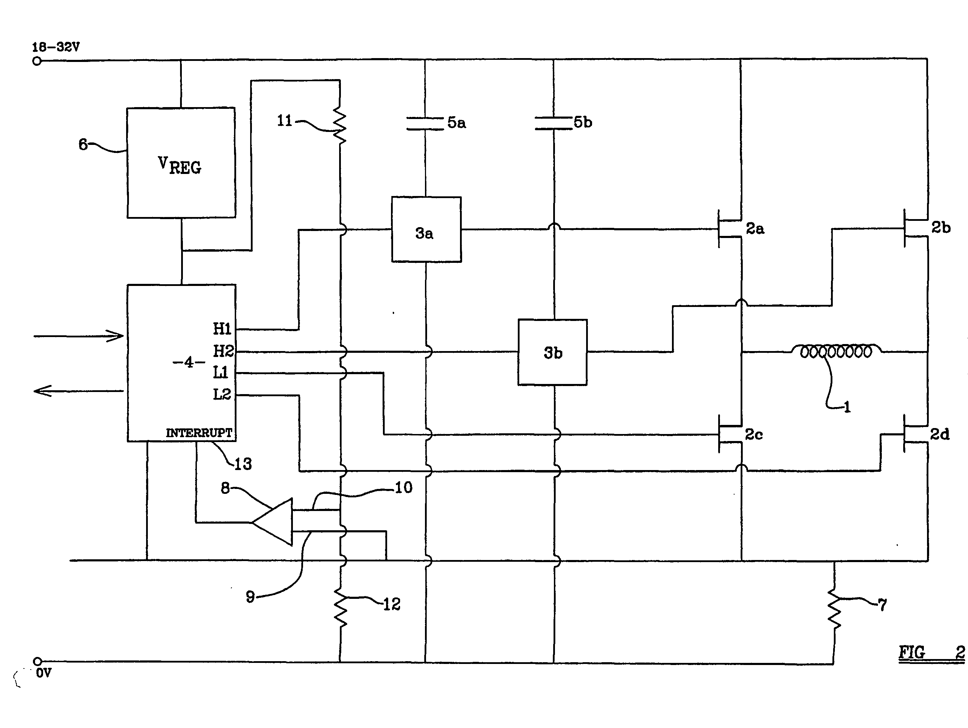

A motor control circuit is shown in Figure 2, like components being accorded the same reference numerals as used in Figure 1.

In the motor control circuit shown in Figure 1, the current passing through the motor winding is sensed by resistor 7 and fed to a software controlled threshold detector located inside the microcontroller IC 4. In contrast, in the motor control circuit shown in Figure 2, this arrangement is dispensed with and an op-amp or other form of comparator 8 is fed with the sensed current. The sensed current is fed to a first input 9 of the comparator 8 and the second input 10 of the comparator is fed by the junction of the two resistors 11, 12 forming a voltage divider circuit. The resistors 11,12 are connected in series between the output of the linear DC-DC converter (voltage regulator) 6 and the bottom rail. The voltage divider sets a reference voltage representative of the threshold current which the sensed current across current sensing resistor 7 cannot rise above in an overcurrent situation. Importantly, the output of the comparator 8 is fed to an Interrupt input 13 on the microcontroller IC 4. The comparator 8 and voltage divider comprise thresholding circuitry operable to determine if a signal indicative of a winding current (i.e. the sensed current) exceeds a reference level.

When the threshold current determined by the reference voltage set by the voltage divider is exceeded, the interrupt input is triggered and the micro controller IC 4 immediately switches off power to the windings 1. This arrangement offers real time current limiting or protection whereas the reaction time of conventional techniques was limited by the response time of the internal threshold detector and the processing speed of the microcontroller IC 4. It will be appreciated that this arrangement takes the thresholding function out of the microcontroller IC 4, thereby obviating the need for the internal threshold detector.

Thus, in general terms, this motor control circuit comprises a microcontroller IC operable to provide a driving current to the windings of the motor to be controlled and having an interrupt input which, once triggered, stops the driving current to the windings and thresholding circuitry operable to determine if a signal indicative of a winding current exceeds a reference level and, if so, to trigger the interrupt input.

Whilst the thresholding function is usefully removed from the microcontroller IC 4 to give a far improved overcurrent response time (in the order of 2-3 microseconds, rather than 50-100 microseconds for a conventional arrangement), the motor control circuit shown in Figure 2 is not capable of varying the threshold.

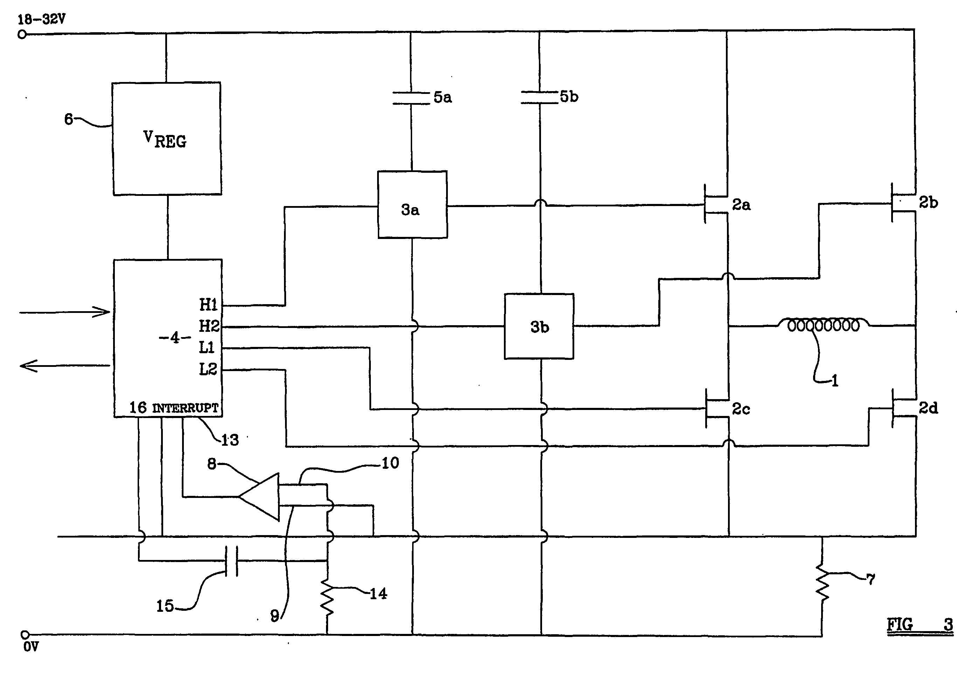

In an embodiment of the present invention, threshold variation is provided in addition to the faster overcurrent reaction time allowed by the embodiment described above. Referring now to Figure 3, the first input 9 to the comparator 8 is still fed with the sensing current voltage form resistor 7. The second input 10 to the comparator is connected to a low pass filter comprising a resistor 14 and capacitor 15. The input for the low pass filter is a software controlled pulse output 16 from the microcontroller IC 4 - a digital signal generated by the microcontroller. The frequency and/or mark space ratio of the pulse waveform is variable by the software. Accordingly, the output of the low pass filter comprises a voltage, the amplitude of which is controlled by the frequency and/or mark space ratio of the pulse waveform generated and software controlled by the microcontroller IC 4. This is used to set a software controlled variable reference voltage to which the sensed current voltage can be compared.

As with the embodiment shown in Figure 2, the comparator output is fed to an Interrupt input 13 on the microcontroller IC 4 to obtain the benefit of an improved overcurrent response time.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A motor control circuit for controlling a motor, the circuit comprising a microcontroller (4) operable to provide a driving current to the windings (1) of the motor to be controlled and having an interrupt input (13) which, once triggered, stops the driving current to the windings and thresholding circuitry operable to determine if a signal indicative of a winding current exceeds a reference level and, if so, to trigger the interrupt input, wherein the thresholding circuitry comprises a reference level setting circuit (11, 12) to set a variable reference level and a comparator circuit to compare the signal indicative of the winding current with the variable reference level.

2. A circuit according to Claim 1, wherein the variable reference level is software controlled.

3. A circuit according to Claim 1 or 2, wherein the reference level setting circuit comprises a low pass filter fed by a variable frequency and/or mark space ratio pulse waveform, the output of the low pass filter comprising a variable reference voltage.

4. A circuit according to Claim 3, wherein the variable frequency and/or mark space ratio pulse waveform is an output of the microcontroller.

5. A circuit according to Claim 3 or 4, wherein the frequency of the waveform is software controlled.

## Patentansprüche

1. Motorsteuerschaltkreis zum Steuern eines Motors, wobei der Schaltkreis einen Mikrocontroller (4) aufweist, der einen Ansteuerstrom an die Wicklungen (1) des zu steuernden Motors anlegen kann und einen Unterbrechungseingang (13) aufweist, der dann, wenn er einmal getriggert wurde, den Ansteuerstrom zu den Wicklungen unterbricht, sowie eine Schwellwertschaltung, die ermitteln kann, ob ein Signal, das einen Wicklungsstrom angibt, einen Bezugspegel überschreitet, und wenn ja, den Unterbrechungseingang triggern kann, wobei die Schwellwertschaltung einen Referenzpegel-Einstellschaltkreis (11, 12) zum Einstellen eines variablen Referenzpegels und einen Vergleicherschaltkreis zum Vergleichen des Signals, das den Wicklungsstrom angibt, mit dem variablen Referenzpegel aufweist.

2. Schaltkreis nach Anspruch 1, wobei der variable Referenzpegel software gesteuert ist.

3. Schaltkreis nach Anspruch 1 oder 2, wobei der Referenzpegel-Einstellschaltkreis ein Tiefpaßfilter aufweist, das von einer Impulswellenform mit variabler Frequenz und/oder variablem Tastverhältnis gespeist wird, wobei der Ausgang des Tiefpaßfilters eine variable Referenzspannung umfaßt.

4. Schaltkreis nach Anspruch 3, wobei die Impulswellenform mit variabler Frequenz und/oder variablem Tastverhältnis ein Ausgangssignal des Mikrocontrollers ist.

5. Schaltkreis nach Anspruch 3 oder 4, wobei die Frequenz der Wellenform softwaregesteuert ist.

## Revendications

1. Circuit de commande de moteur pour commander un moteur, le circuit comprenant un microcontrôleur (4) pouvant être mis en oeuvre pour fournir un courant de commande aux enroulements (1) du moteur devant être commaridé et comportant une entrée d'interruption (13) qui, une fois déclenchée, arrête le courant de commande vers les enroulements et des éléments de circuit de détermination de seuil pouvant être mis en oeuvre pour déterminer si un signal indicatif d'un courant d'enroulement dépasse un niveau de référence et, si c'est le cas, pour déclencher l'entrée d'interruption, dans lequel les éléments de circuit de détermination de seuil comprennent un circuit de détermination de niveau de référence (11, 12) pour déterminer un niveau de référence variable et un circuit comparateur pour comparer le signal indicatif du courant d'enroulement avec le niveau de référence variable.

2. Circuit selon la revendication 1, dans lequel le niveau de référence variable est commandé par logiciel.

3. Circuit selon la revendication 1 ou 2, dans lequel le circuit de détermination de niveau de référence comprend un filtre passe-bas alimenté par une forme d'onde impulsionnelle à fréquence variable et/ou à rapport de marques et espaces, la sortie du filtre passe-bas comprenant une tension de référence variable.

4. Circuit selon la revendication 3, dans lequel la forme d'onde impulsionnelle à fréquence variable et/ou à rapport de marques et espaces est une sortie du microcontrôleur.

5. Circuit selon la revendication 3 ou 4, dans lequel la fréquence de la forme d'onde est commandée par logiciel.
